# EUROPEAN PATENT SPECIFICATION

(11) **EP 4 015 312 B1**
(45) Date of publication and mention of the grant of the patent: **10.07.2024**
(21) Application number: 20215029.8
(22) Date of filing: 17.12.2020
(51) Int. Cl.: B60R 9/052, B60R 9/058

(54) **SUPPORT FOOT**
STÜTZFUSS
PIED DE SUPPORT

(43) Date of publication of application: 22.06.2022
(73) Proprietor: Mont Blanc Industri AB, 516 90 Dalsjöfors (SE)
(72) Inventor: Sörqvist, Christofer, SE-523 35 Ulricehamn (SE)
(74) Representative: AWA Sweden AB

(56) References cited:
- EP-A1- 3 290 273
- EP-A2- 0 091 889
- WO-A1-2005/037606
- DE-A1- 3 709 335
- DE-U1- 202019 100 142
- US-B1- 6 997 657
- US-B1- 7 721 925

## Description

### Field of the invention

The present invention relates to a support foot for luggage carriers mounted on the roof a vehicle, more specifically a support foot wherein unauthorized access is prohibited by a locking means and wherein said locking means is covered.

### Background

In order to facilitate the transportation of bulky, cumbersome cargo or leisure equipment, such as bicycles, by vehicles, luggage carriers such as roof rails are often employed. The rails, mounted in the longitudinal direction of the vehicle, are in turn adapted to support roof boxes or transverse load bars upon which equipment can be suspended. To provide adaptability for cargo of varying weight and dimension, such load bars are often readily mounted at a position of choice along the length of the roof rails and fastened thereto by means of clamping force mediated by a lever. Thus, in order to prevent unauthorized access to the support feet, the load bar and the cargo it carries, said support feet can be equipped with some anti-theft measure.

Common in the prior art is the provision of a covering of the fastening means of the support foot. By covering the fastening means or any other mechanism that controls the support foot and/or the load bar, it is made inaccessible from the outside. Such a covering is further fixated to said support foot by a lock. However, this configuration entails that the lock is exposed to the external environment, rendering it prone to contamination. This is solved in the prior art by providing a separate cover for the lock.

An example of a prior art solution is provided in EP 3290273, which discloses the features of the preamble of claim 1.

The usage of different cargo carriers adapted for vehicle roofs can be somewhat tedious due to the amount of operations needed in order to displace, mount, adjust and fasten the cargo. This can prove to be further problematic by the fact that this kind of equipment often is used in harsh climates, such as cold weather, and is by default difficult to handle due to its placement on the roof of the vehicle. The addition of a separate cover for the lock of a support foot thus provide further inconvenience in handling the equipment, making it harder to use and less appealing for the end user. Furthermore, a separate cover is operated independently of other mechanisms, including the lock, which entails that the state of such a cover does not disclose any information about the state of said lock, i.e. if it is locked or unlocked. A user will, e.g., not be able to tell by an open cover if the support foot is locked or unlocked, and therefore have to take further actions in order to determine this.

In light of the above, there is a need for support feet that provides restriction of access to those unauthorized while at the same time maintaining an easy to use device with multipurpose functionality wherein the locking means is protected from contamination by the external environment.

### Summary

An object of the present invention is therefore to alleviate at least some of the abovementioned problems with the current state of the art.

According to a first aspect of the present invention, a support foot for a luggage carrier for a vehicle is provided, the support foot comprising: a first clamping portion and a second clamping portion, wherein at least one of the first and second clamping portions is movable; a clamping mechanism comprising an attachment lever, the attachment lever is arranged to operate in a first plane between a closed and an open position, and thereby also moving the at least one movable clamping portion; a locking means comprising a locked state and an unlocked state characterized in that: the locking means is adapted to receive a key; and wherein the support foot further comprises a cap comprising a latched state and an unlatched state, wherein the cap is adapted to cover the locking means and at least partially cover the attachment lever when the cap is in the latched state and wherein the cap is adapted to pivot in a second plane when the cap is in the unlatched state; and wherein the cap is in the latched state when the locking means is in the locked state, and wherein the cap is in the unlatched state when the locking means is in the unlocked state.

A locked state of a locking means is to be understood as a state in which the locking means is locked, e.g. in a state such that accessibility to crucial functionality of the support foot is hindered so that it e.g. can not be removed from the roof rail on which it is mounted, and that means for unlocking, in the form of a key, has to be applied in order for the locking means to be unlocked. An unlocking state is correspondingly to be understood as a state which the locking means is in after it has bin unlocked.

The cap is, when the locking means is in the locked state, adapted to at least partially cover the locking means. This entails that the cap may cover or hide parts of the locking means, such as parts that are essential to cover from external contact. The cap may also entirely cover or hide the locking means. By covering parts of or all of the locking means by the cap, the locking means is e.g. protected from external contamination. This is especially important during e.g. snowing conditions, where covering the locking means renders it unsusceptible to clogging. Moreover, the locking means is protected from rain and other sources of moisture which, in the case the locking means is comprised of metal, can rust the lock and thereby rendering it unusable. The covering of the locking means furthermore protects it from any physical damage originating from e.g. any cargo that is suspended or that is being suspended on the roof of the vehicle.

Furthermore, by having a cap that is adapted to at least partially cover the locking means only when the locking means is in a locked state, the covering or partial covering of the locking means is indicative of the locking means being in a locked state. This is a benefit to the user of the invention who, for example, can confirm that the support foot is locked just by observing that the locking means is covered. Furthermore, if the locking means is in the unlocked state, the cap is hindered to move to the cap position in which the locking means is at least partially covered. This entails that it will be clear to a user of the invention whether or not the locking means is locked or not based on whether or not they can at least partially cover the locking means with the cap.

By having a cap that covers both the locking means for the support foot as well as the internal mechanisms, such as clamping means or other manual controls, less material is needed in order to produce the support foot. A support foot according to the present invention is also flush, since it has fewer protruding elements, and thus minimizes draft when in use on a vehicle in motion.

Moreover, by having the locking means incorporated, built-in or attached to an attachment lever arranged to secure a load bar to a mounting rail, covering of the locking means entails covering of the attachment lever. The covering of the attachment lever protects it, in the same manner as the covering of the locking means, from external contamination. Furthermore, by having the locking means incorporated, built-in or attached to an attachment lever, the locking state of the locking means also determines the ability to use the attachment lever and therefore the ability to attach or detach the load bar, on which the support foot is attached, from a mounting rail.

The locking means may be situated at any position along the attachment lever. Preferably, the locking means is situated at a distal end of the attachment lever.

The plane in which the attachment lever is operable may as an example be substantially perpendicular to a plane in which the cap, when said locking means is in said unlocking state, is pivotable. In such a case, the mobility of the attachment lever and the mobility of the cap does not influence one another, which renders the invention easier to use. The lever may as an example be adapted to be rotatable 90 degrees in relation to the support foot. The locking means may be situated at a distal end of the attachment lever so that the locking means, when the lever is rotated out from the support foot from a closed position to an open position, is substantially maximally displaced from the support foot.

According to an exemplary embodiment of the present invention, the cap further comprises a stopping protrusion, wherein the attachment lever further comprises a slit, and wherein the stopping protrusion is slideably arranged within the slit.

By having the cap comprising a stopping protrusion arranged within the slit of the attachment lever, the attachment lever is unable to be rotationally operated away from the support foot unless the stopping protrusion of the cap is fully detached from the slit.

According to an exemplary embodiment of the present invention, the locking means further comprises a first stopping surface, wherein the first stopping surface is adapted to abut on and stop the stopping protrusion of the cap when the locking means is in the locked state such that the cap is in the latched state.

The first stopping surface stops the cap from transitioning from the latched state to the unlatched state.

According to an exemplary embodiment of the present invention, the locking means further comprises a second stopping surface, wherein the second stopping surface is adapted to abut on and stop the stopping protrusion of the cap when the locking means is in the unlocked state such that the cap is in the unlatched state.

The second stopping surface stops the cap from transitioning from the unlatched state to the latched state.

The first stopping surface and the second stopping surface may be arranged at an angle in relation to each other. For example, the first stopping surface may be arranged at an angle of 90° in relation to the second stopping surface.

According to an exemplary embodiment of the present invention, the cap comprises an abutment surface adapted to abut on an outer peripheral surface of the locking means when the locking means is in the unlocked state.

As such, the cap is hindered from moving to a position in which it is covering the locking means.

According to an exemplary embodiment of the present invention, the attachment lever further comprises a cylindrical hollow portion, and wherein the locking means is adapted to be arranged within the cylindrical hollow portion.

The cylindrical hollow portion may also be arranged so that it intersects the slit of the attachment lever. The attachment lever and the slit may e.g. intersect in a substantially perpendicular manner.

According to an exemplary embodiment of the present invention, the cylindrical hollow portion comprises a cirumferential track arranged along an inner circumference of the cylindrical hollow portion, and wherein the locking means comprises at least one sliding surface adapted to abut on the at least one circumferential track portion such that the locking means is adapted to slide along the at least one circumferential track portion when the locking means is rotated.

The locking means is rotated e.g. when it is being brought from an unlocked state to a locked state or from a locked state to an unlocked state.

According to an exemplary embodiment of the present invention, wherein the at least one circumferential track portion is spirally arranged along a periphery of the cylindrical hollow portion such that the locking means is adapted to move along the rotational axis shen the locking means is rotated.

The locking means may e.g. comprise a first and a second sliding surface, wherein the cylindrical hollow portion comprises a first and a second cirumferential track portion, and wherein the first sliding surface is adapted to abut on the circumferential track portion and the second sliding surface is adapted to abut on the second circumferential track portion.

According to an exemplary embodiment, a support foot is provided wherein the cap is pivotably movable between at least two cap positions when the locking means is in said unlocking state.

The cap may e.g. be pivoted out of a plane that comprises the locking means and that is substantially horizontal in relation to a roof rail on which the support foot is adapted to be mounted. By pivoting the cap in this manner, the user is granted access to essential parts of the support foot, such as clamping mechanisms. The cap may be snap-locked in a pivoted position.

According to a third aspect of the present invention, a load bar for a vehicle roof is provided, the load bar comprising at least one support foot according to the first aspect of the present invention.

According to a second aspect of the present invention, a method for covering a locking means and at least partially cover an attachment lever of a support foot is provided, said method comprising: providing the support foot, wherein the locking means is in the unlocked state and the cap is in the unlatched state; operating the attachment lever in the first plane from an open position to a closed position; moving the cap from a first unlatched position to a second unlatched position; bringing the locking means from the unlocked state to the locked state, thereby also bringing the cap from the unlatched state to the latched state; and moving the cap from a first latched position to a second latched position, thereby covering the locking means and at least partially cover the attachment lever.

### Brief description of the drawings

The inventive concept, some non-limiting embodiments, and further advantages of the inventive concept will now be described with references to the drawings, in which:
- Fig. 1: is a perspective view of one embodiment of a support foot according to a first aspect of the present invention where the cap is in a latched state.
- Fig. 2a: is a perspective view of an embodiment of a support foot where the cap is in a latched state but in a different position with respect to the position thereof in Fig. 1, and where the locking means is visible and in a locked state.
- Fig. 2b: is a perspective view of an embodiment of a support foot where the foot is shown in a perspective different than that in Fig. 2a.
- Fig. 3a: is a perspective view of an embodiment of a support foot where the locking means is being brought from a locked state to an unlocked state and where the cap is being brought from a latched state to an unlatched state.
- Fig. 3b: is a perspective view of an embodiment of the locking means when being brought from the locked state to the unlocked state shown in three different positions.
- Fig. 4a: is a perspective view of an embodiment of a support foot where the locking means is in an unlocked state and the cap is in a unlatched state.
- Fig. 4b: is a perspective view of the locking means as shown in Fig. 4a.
- Fig. 5a-c: are perspective views of an alternative embodiment of the present invention detailing the cap and the locking means.
- Fig. 6a: is a perspective view of an embodiment of an attachment lever of the support foot.
- Fig. 6b: is a perspective view of the attachment lever shown in Fig. 5a detailing a cylindrical hollow portion of the lever.
- Fig. 6c: is a perspective view of an exemplary embodiment of the locking means adapted to be arranged within the cylindrical hollow portion as shown in Fig. 5b.
- Fig. 7a: is a perspective view of an embodiment of the support foot when the cap is in a tilted position.
- Fig. 7b: is a perspective view of an embodiment of the attachment lever when in a closed position.
- Fig. 8a: is a perspective view of an embodiment of the attachment lever when the lever is brought from the closed position to an open position.
- Fig 8b: is a perspective view of an embodiment of the support foot when the cap is in a tilted position and when the attachment lever is in an open position.

### Detailed description of the drawings

In the following detailed description, some embodiments of the present invention will be described. However, it is to be understood that features of the different embodiments are exchangeable between the embodiments and may be combined in different ways, unless anything is specifically indicated. Even though in the following description, numerous details are set forth to provide a more thorough understanding of the present invention, it will be apparent to one skilled in the art that the present invention may be practiced without these details. In other instances, well known constructions or functions are not described in detail, so as not to obscure the present invention.

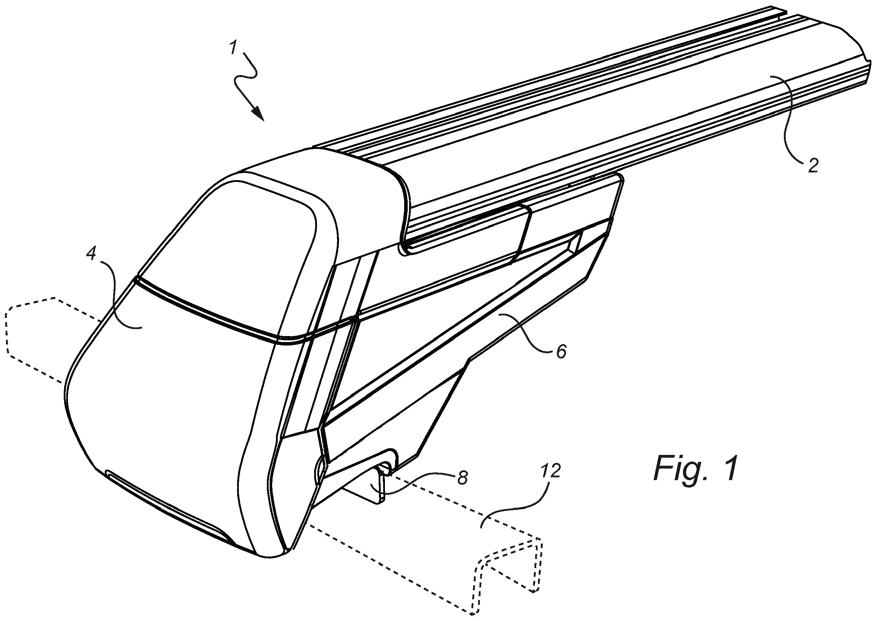

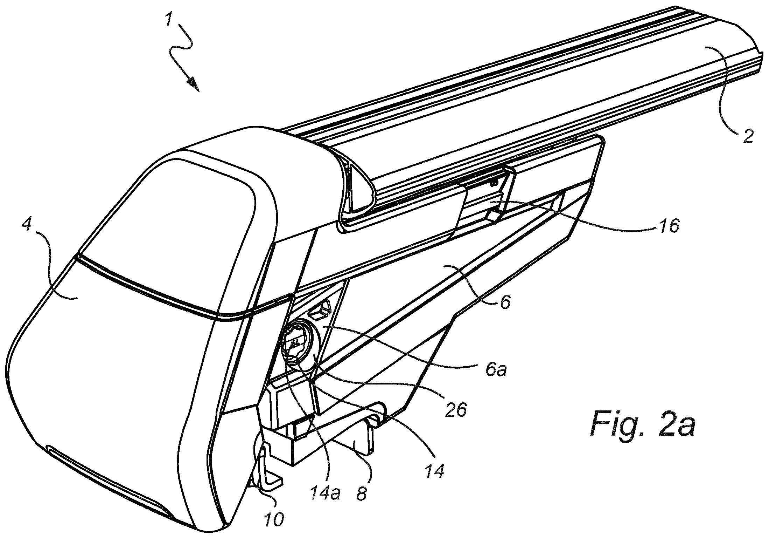

Fig. 1 shows a support foot 1 according to the first aspect of the present invention. The support foot 1 is mounted on a load bar 2 adapted to be arranged on the roof of a vehicle. The support foot 1 comprises a cap 4 and an attachment lever 6. The attachment lever 6 is comprised in a clamping mechanism that further comprises a first clamping portion 8 and a second clamping portion 10 (shown in Fig. 2a). Here, the second clamping portion 10 is partially covered by the cap 4. The attachment lever 6 is adapted to operate in a first plane substantially coinciding with a longitudinal extension of the foot 1. The longitudinal extension of the foot 1 is, when in use, substantially coinciding with a plane horizontal with respect to the ground. The first and the second clamping portions 8, 10 are adapted, when in use, to grip a roof bar 12 of a vehicle such that the support foot 1 as well as the load bar 2 is fixedly attached thereto. The clamping mechanism is operated by the attachment lever 6 such that when the lever 6 is brought, by operating it in the first plane, from a closed position to an open position, the first and second clamping portions 8, 10 are detached from the roof bar 12. Furthermore, when the lever 6 is brought from an open position to a closed position, the first and second clamping portions 8, 10 are grips the roof bar 12. Even though the attachment lever 6 is, in Fig. 1, shown in a closed position, Fig. 1 does not show the support foot 1 when mounted on the roof bar 12, but the foot 1 and the roof bar 12 are rather for illustrating purposes shown separate.

In Fig. 2a, the cap 4 has been displaced along the longitudinal extension of the foot 1. The cap 4 is slideably displaceable along the longitudinal extension of the foot 1 by sliding along a rail 16 of the foot 1. The displacement of the cap 4 reveals the locking means 14 of the attachment lever 6. The locking means 14 is arranged within a cylindrical hollow portion 26 of the attachment lever 6. The displacement of the cap 4 further reveals a distal surface portion 6a of the attachment lever 6. The locking means 14 and the distal surface portion 6a are therefore arranged to be covered by the cap 4 when the cap 4 is in the position as shown in Fig. 1.

The locking means in Fig. 2a is in a locked state. The locking means 14 is adapted to receive a key (not shown). The locking mechanism of the locking means 14 is here shown to comprise an outer protruding surface 14a arranged to be engageable with a key (not shown) adapted to interact with the specific geometry of said outer protruding surface 14a. Here, the outer protruding surface 14a has a smooth polygonal geometry, but any other geometry, such as triangular, quadratic or hexagonal, is possible. Furthermore, the locking means 14 may comprise any other type of locking mechanism known to a person skilled in the art, such as one having a keyhole arranged to interact with a key adapted to be inserted into said keyhole.

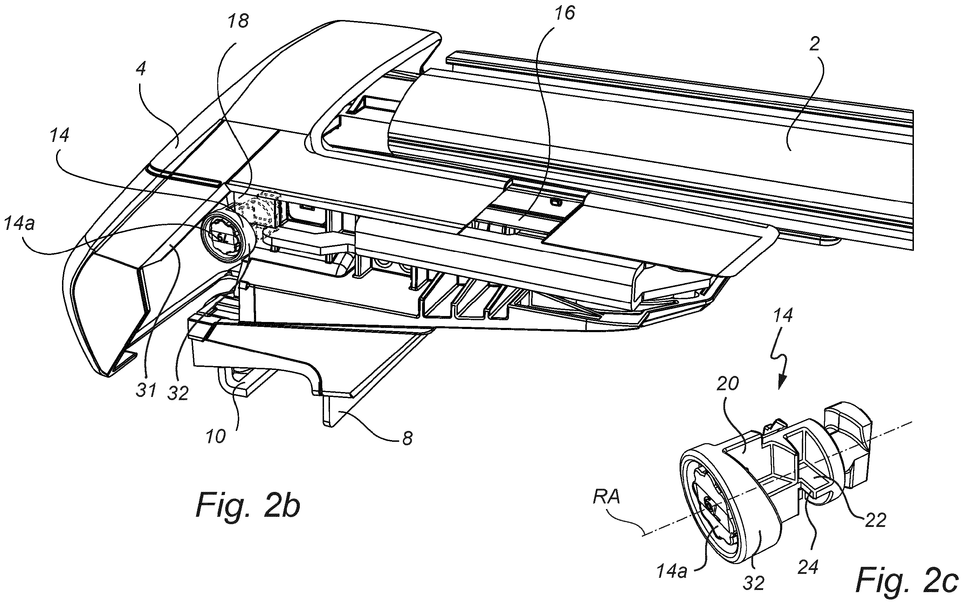

Fig. 2b shows the foot 1 from another perspective where the attachment lever 6 is not shown in the purpose of displaying inner details of the foot 1. The locking means 14 is here in a locked state, and the cap 4 is in a latched state. The cap 4 is in the latched state because the locking means 14 is in the locked state. In the latched state, the movement of the cap 4 is restricted. In the present embodiment, the cap 4 when the locking means 14 is in the locked state is substantially restricted to move at least between the position shown in Fig. 1, i.e. the position in which the locking means 14 is fully covered by the cap 4, and the position shown in Fig. 2a and 2b, i.e. the position in which the locking means 14 is not covered by the cap 4. That the cap 4 is movable between at least two cap positions when the locking means 14 is in said locked state is to be understood that the cap 4 is restricted to move within a range of cap positions dictated by the certain state, the locked state, of the locking means.

The cap 4 further comprises a stopping protrusion 18 adapted to stop the cap 4 from being displaced further. The cap 4 is stopped by the stopping protrusion 18 making contact with the locking means 14 when the means 14 is in the locked state.

In fig. 2c, the locking means 14 is shown in detail. The locking means 14 is here shown as having a substantially cylindrical extension. The locking means 14 comprises a first stopping surface 20 adapted to make contact with the stopping protrusion 18 of the cap 14. When the locking means 14 is being brought from a locked state to an unlocked state, the locking means 14 is rotated around a rotation axis RA substantially coinciding with the cylindrical extension of the locking means 14. By rotating the locking means around the rotation axis RA, the first stopping surface 20 is also rotated. The locking means 14 is arranged to rotate in such a way as to allow passage of the stopping protrusion 18 of the cap 4.

The cap 4 further comprises an abutment surface 31 adapted to abut on an outer peripheral surface 32 of the locking means 14 when the locking means 14 is in the unlocked state.

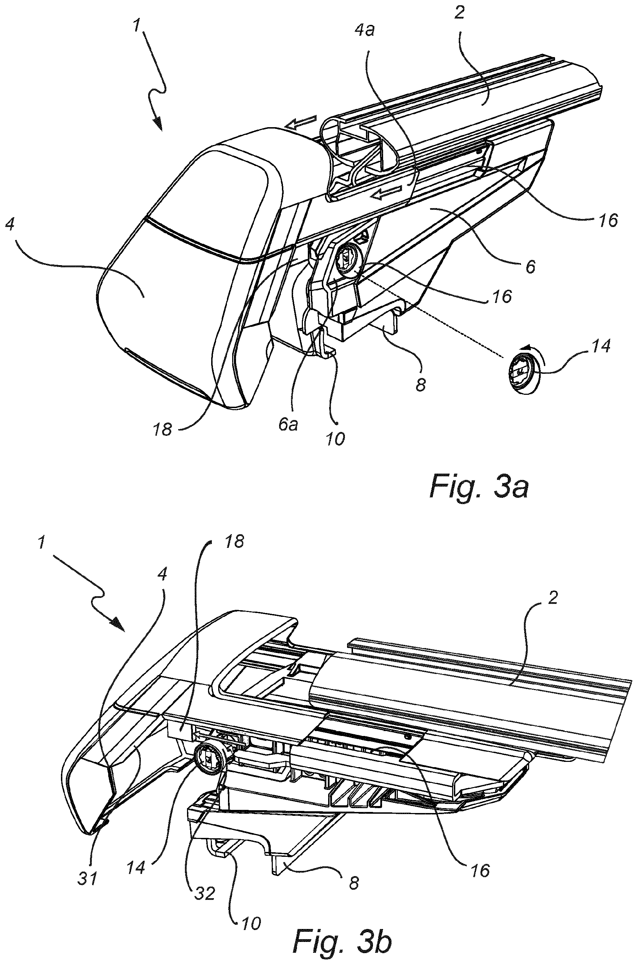

Fig. 3a shows foot 1 when the locking means 14 is being brought from the locked state to an unlocked state. For the purpose of illustration, the locking means 14 has in Fig. 3a been extracted from the foot 1, and a curved arrow around the locking means 14 illustrates the direction of rotation when the means 14 is brought from the locked state to the unlocked state. In the present embodiment, the locking means 14 is rotated around 90° counterclockwise in order to bring it from the locked state to the unlocked state.

The arrow at a linking arm 4a of the cap 4 indicates the direction of displacement occurring as the locking means 14 is brought from the locked state to the unlocked state. This displacement of the cap 4 may occur simultaneously as the locking means 14 is brought from the locked state to the unlocked state, or it may occur after. In another example, the displacement partially occurs due to the locking means 14 being brought from the locked state to the unlocked state, whereafter the last partial displacement is to be carried out by hand. When the cap 4 has been displaced due to the locking means 14 being brought from the locked state to the unlocked state, the cap 4 is in an unlatched state. This is e.g. indicated by the stopping protrusion 18 of the cap 4 being positioned to the left of the locking means 14, i.e. the first stopping surface 20 of the locking means 14 (shown in Fig. 2c) has been rotated around the axis RA such that the stopping protrusion 18 and consequently the cap 4 has been allowed displacement from a latched state to an unlatched state. Therefore, the cap 4 is in an unlatched state when the locking means 14 is in an unlocked state. Thus, the cap 4 is restricted to move within a range of cap positions dictated by the unlocked state when the locking means 14 is in the unlocked state. Alternatively, the cap 4 may not be displaced at all when the locking means 14 is brought from the locked state to the unlocked state. Furthermore, the cap 4 comprises an abutment surface 31 adapted to abut on an outer peripheral surface 32 of the locking means 14 when the locking means 14 is in the unlocked state.

By bringing the locking means 14 from one state to the other, i.e. from a locked state to an unlocked state or from an unlocked state to a locked state, thus brings the cap 4 from one range of cap positions to another range of cap positions. In the alternative case where the cap 4 is not displaced at all when the locking means 14 is brought from the locked state to the unlocked state, the range of cap positions the cap 4 is restricted to when the locking means 14 is in the locked state may overlap with the range of cap positions the cap 4 is restricted to when the locking means 14 is in the unlocked state. The movement of the cap 4 may, for example, be restricted between two end positions when the locking means 14 is in the locked state, wherein one end position coincides with the range of allowable cap positions when the locking means 14 is in the locked state. A cap position that is common to the locked state and the unlocked state may, e.g., be a position in which the cap 4 has to be in order for the locking means 14 to be brought from one state to the other. The range of cap positions may not overlap at all, e.g. in the case where the cap 4 is displaced when the locking means 14 is brought from the locked state to the unlocked state.

That the cap 4 is positioned at an end position of any range of cap position may be indicated by some indicator means, such as a visual indication or an acoustic indication. An acoustic indication may be a sound of a snap-fitting or snap-locking of the cap 4 in such a cap position.

Fig. 3b displays a detailed illustration of three views of the locking means 14 and the stopping protrusion 18: a first view, a second view and a third view counting from left to right as they are displayed in Fig. 3b. The three views illustrate how the locking means 14 is brought from the locked state to the unlocked state and how, as a result, the first stopping protrusion 18 of the cap 4 is allowed passage by the locking means 14. In the first, leftmost, view, the locking means 14 is in the locked state in which the first stopping surface 20 of the locking means 14 abuts on and stops the stopping protrusion 18 of the cap 4 such that the cap 4 is in the latched state. The second, middle, view shows the locking means 14 being brought from the locked state to the unlocked state and having been rotated 90° counterclockwise such that the stopping surface 20 also has been rotated 90° so that it does not abut on and stop the stopping protrusion 18 and thus allows passage of the cap 4. The third, rightmost view show the stopping protrusion 18 having passed the locking means 14. The cap 4 is in the rightmost view in the unlatched state.

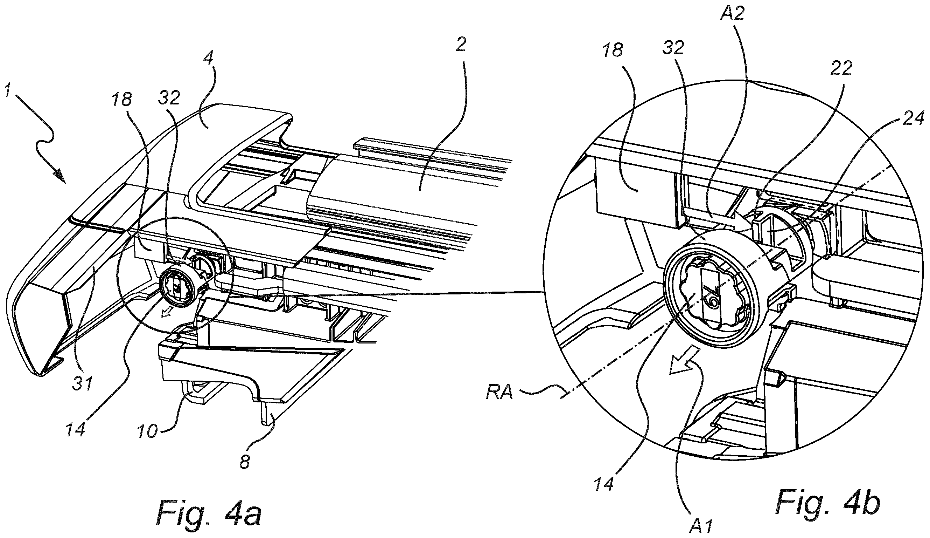

In Fig. 4A-B the cap 4 is in the unlatched state and the locking means 14 is in the unlocked state. When the cap 4 is in the unlatched state, the movement of the cap 4 is restricted such that the cap 4 at least cannot assume the position in which it at least partially cover the locking means 14. As is shown in Fig. 4b, such restriction of the movement of the cap 4 is in an exemplary embodiment achieved by a stopping wall 24 of the locking means 14 comprising a second stopping surface 22 adapted to abut on and stop the stopping protrusion 18 of the cap 4. The stopping wall 24 and the second stopping surface 22 is here shown as being substantially orthogonal to the first stopping surface 20. In this exemplary embodiment, the first stopping surface 20, which was perpendicular to the movement of the cap 4, i.e. perpendicular to a longitudinal extension of the support foot 1, is parallel to the movement of the cap 4 when the locking means 14 is in the unlocked state. The movement of the cap 4 may e.g. be along the rail 16 as shown inter alia in Fig. 2a. Thus, the second stopping surface 22 is parallel to the to the movement of the cap 4 when the locking means 14 is in the locked state and perpendicular to the movement of the cap 4 when the locking means 14 is in the unlocked state.

The locking means 14 is further, when brought from the locked state to the unlocked state, arranged to be displaced. As is seen in Fig. 4b, the locking means 14 is displaced in a direction substantially transverse to a longitudinal extension of the support foot 1 and along the rotational axis RA of the locking means 14. This displacement is indicated by the arrow A1. The displacement of the locking means 14 consequently displaces the stopping wall 24 so that it is aligned with a line of movement of the cap 4, especially a line of movement of the stopping protrusion 18 indicated by the arrow A2. Thus, the locking means 14, when in the unlocked state, is arranged to stop the cap 4 from transitioning from the unlatched state to the latched state.

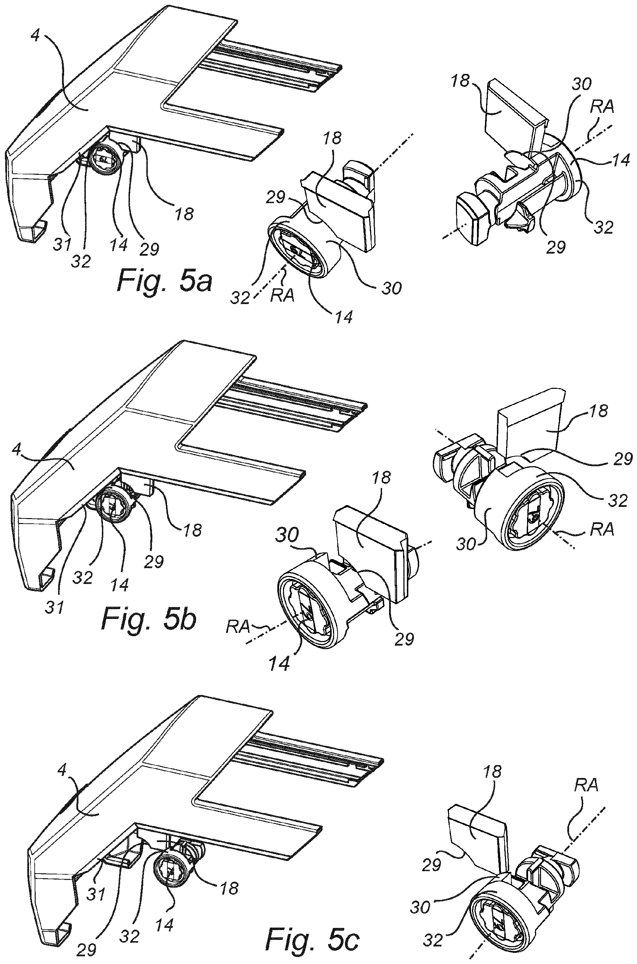

In Fig. 5a-c, an alternative embodiment of the present invention is shown. Here, the stopping protrusion 18 of the cap 4 comprises a radial cut-out 29 adapted to abut on a radial surface 30 of the locking means 14. The radial surface 30 of the locking means 14 may be complementary to the radial cut-out 29 of the cap 4. When the locking means 14 is in the locked state, the radial cut-out 29 will abut on the radial surface 30 such that the cap 4 is prevented to move from the latched state to the unlatched state. Furthermore, as is also shown inter alia in Fig. 2c and Fig. 3a, the cap 4 comprises an abutment surface 31 adapted to abut on an outer peripheral surface 32 of the locking means 14 when the locking means 14 is in the unlocked state. The locking means 14 in the unlocked state is displaced along the rotational axis RA of the locking means 14 in comparison to the locked state. As such, when the locking means 14 has been displaced due to it having been brought from the locked state to the unlocked state, the outer peripheral surface 32 is arranged such that the abutment surface 31 of the cap 4 will abut on the outer peripheral surface 32.

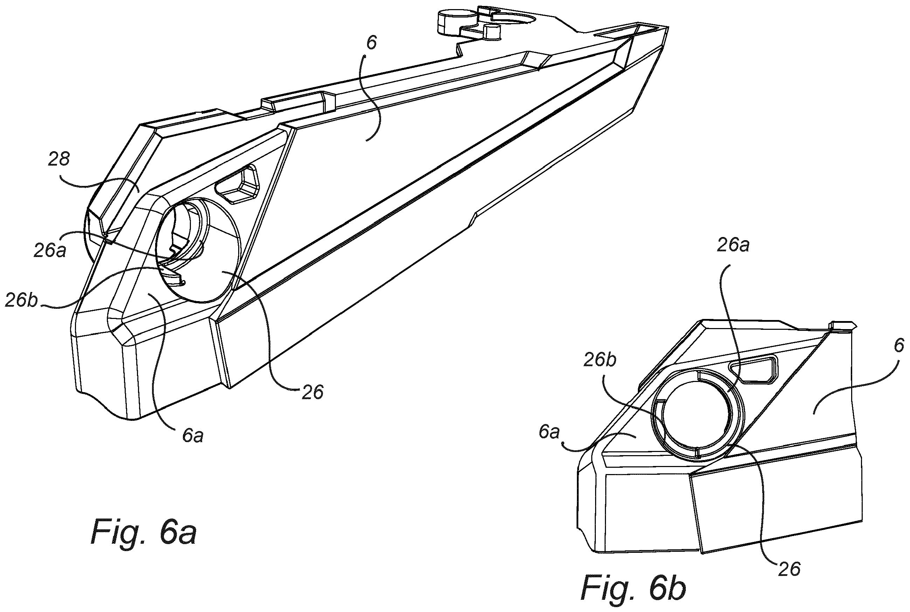

Fig. 5A shows the arrangement of the cap 4 and the locking means 14 when the locking means 14 is in the locked state and the cap 4 is in the latched state. Fig. 5B shows the arrangement of the cap 4 and the locking means 14 when the locking means 14 has been brought from the locked state to the unlocked state, and thus the locking means 14 has been displaced along the rotational axis RA of the locking means 14. Due to the locking means 14 having been displaced along the rotational axis RA, the stopping protrustion 18 of the cap 4 is allowed passaged such that the cap 4 may be arranged in the unlatched state. Fig. 5C shows arrangement of the cap 4 and the locking means 14 when the locking means 14 is in the unlocked state and the cap 4 is in the unlatched state. Here, the outer peripheral surface 32 of the locking means 14 is arranged such that the abutment surface 31 of the cap 4 will abut on the outer peripheral surface 32 if the cap would be moved towards the locking means 14. Fig. 6a-b shows a portion of the attachment lever 6 and the distal surface portion 6a. The cylindrical hollow portion 26 is adapted to receive the locking means 14, wherein the locking means 14 is adapted to be arranged within the cylindrical hollow portion 26. The cylindrical hollow portion 26 comprises at least one circumferential track portion. In this exemplary embodiment, the cylindrical hollow portion 26 comprises a first circumferential track portion 26a and a second circumferential track portion 26b. The first and second circumferential track portions 26a, 26b are adapted to be arranged in contact with the locking means 14 such that the locking means 14 abuts on the first and second circumferential track portions 26a, 26b.

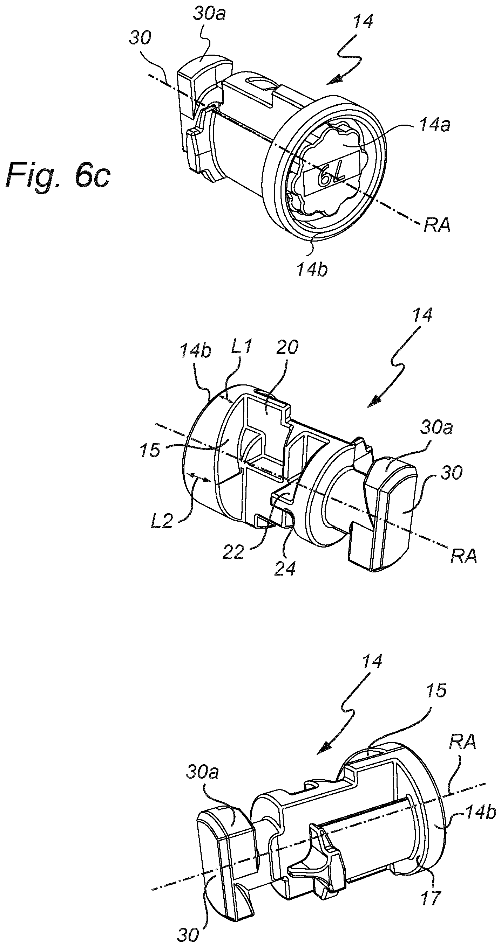

Fig. 6c shows the locking means 14 from three different perspectives. The locking means 14 comprises a first sliding surface 15 adapted to abut on slide along the first circumferential track portion 26a. The first sliding surface 15 is angled with regards to the rotational axis, which is indicated by the increase in length between the sliding surface 15 and a front rim portion 14b of the locking means 14 from l1 to l2, i.e. that l1 <l2. Moreover, the first circumferential track portion 26a is spirally arranged along the circumference of the cylindrical hollow portion 26, and thus also angled with regards to the rotational axis RA. Preferably, the angling of the first circumferential track portion 26a is substantially the same as the angling of the first sliding surface 15. The angling of the first sliding surface 15 facilitates the displacement of the locking means 14 when being brought from the locked state to the unlocked state. When the locking means 14 is being brought from the locked state to the unlocked state, when the locking means 14 is arranged within the cylindrical hollow portion 26, the locking means 14 is rotated around the rotational axis RA such that the first sliding surface 15 slides along the first circumferential track portion 26a. The magnitude of the displacement of the locking means 14 along the rotational axis RS is thus dependent upon the angle by which the first sliding surface 15 and the first circumferential track portion 26a makes with RA. The angle may e.g. be 1 °, 3°, 5°, 10°, 20° or 50°. The locking means 14 further comprises a second sliding surface 17 adapted to abut on the second circumferential track portion 26b. The locking means 14 may comprise further sliding surfaces adapted to abut on and, when the locking means 14 is arranged within the cylindrical hollow portion 26, slide along any circumferential track portion of the cylindrical hollow portion 26 of attachment lever 6.

As is seen in Fig. 6a, the attachment lever 6 further comprises a slit 28 adapted to receive the stopping protrusion 18 of the cap 4. The slit 28 is here shown to intersect the cylindrical hollow portion 26, i.e. the cylindrical hollow portion 26 is accessible through the slit 28. The stopping protrusion 18 is slideably arrangeable within the slit 28. The length of the slit may vary. As an example, the slit 28 may end directly after the locking means such that the stopping protrusion 18 is not arranged within the slit when the cap 4 is in the unlatched state. Alternatively, the slit 28 may continue further than the locking means 14 such that the stopping protrusion 18 may be arranged within the slit 28 when the cap 4 is in the unlatched state. In this way, the attachment lever 6 comprising the slit 28 is hindered from operating in the first plane even though the locking means 14 is in the unlocked state.

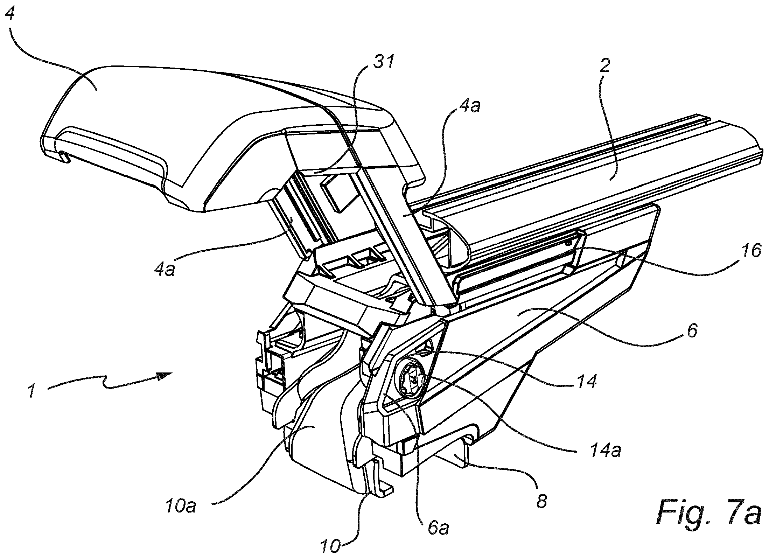

Fig. 7a shows the support foot 1 when the cap 4 is in the unlatched state and in a tilted position. The cap 4 is here shown as being tilted with respect the longitudinal extension of the foot 1. That the cap 4 is tilted is to be understood as at least one extension of the cap 4 being different in the tilted position than in the position in which the cap 4 covers the locking means. In fig. 6a, a plane coinciding with a longitudinal extension of a first and second linking arm 4 a,b of the cap 4 deviates from a longitudinal extension of the rail 16. The cap 4 is therefore tiltable in a plane coinciding with the longitudinal extension of the support foot 1.

The cap 4 may further be fixated in the tilted position. The fixation may e.g. be snap-locking of the cap 4 in the tilted position. By being able to snap-lock the cap 4 in a tilted position, e.g. the position shown in Fig. 7a, a user of the support foot 1 has access to the inner mechanisms of the support foot, such as a curved outer surface 10a of the second clamping portion 10. Furthermore, the cap 4 is fixated in such a position so that it does not cover any portion of the attachment lever 6. That the cap 4 does not cover any portion of the attachment lever 6 implies that it is not restricted in movement by the cap 4. The attachment lever 6 is, when not covered by the cap 4 and when the locking means 14 is in the unlocked state, operable in a first plane.

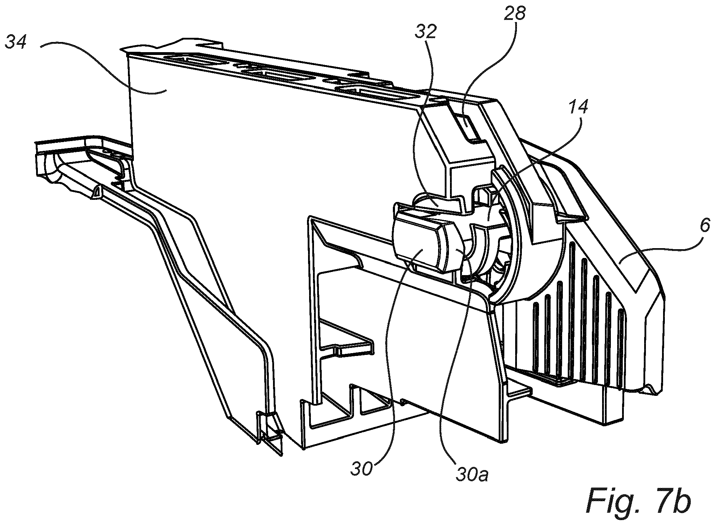

Fig. 7b shows the attachment lever 6 from a backside perspective in relation to Fig. 7a. The locking means 14 comprises a clasp 30 adapted to engage with or disengage from an indention 32 comprised in a side wall 34 of the support foot 1. The clasp 30 further comprises an edge portion 30a. When the locking means 14 is in the locked state, the edge portion 30a is engaged with the indention 32 such that the attachment lever 6 is restricted to operate at least away from the side wall 34. When the locking means 14 is in the unlocked state, as is shown in Fig. 7b, the edge portion 30a is disengaged from the indention 32, and the attachment lever 6 is thus permitted to operate to and/or from the side wall 34. The plane in which the attachment lever 6 is adapted to operate in may as an exemplary embodiment be perpendicular to the plane in which the cap 4 is tiltable.

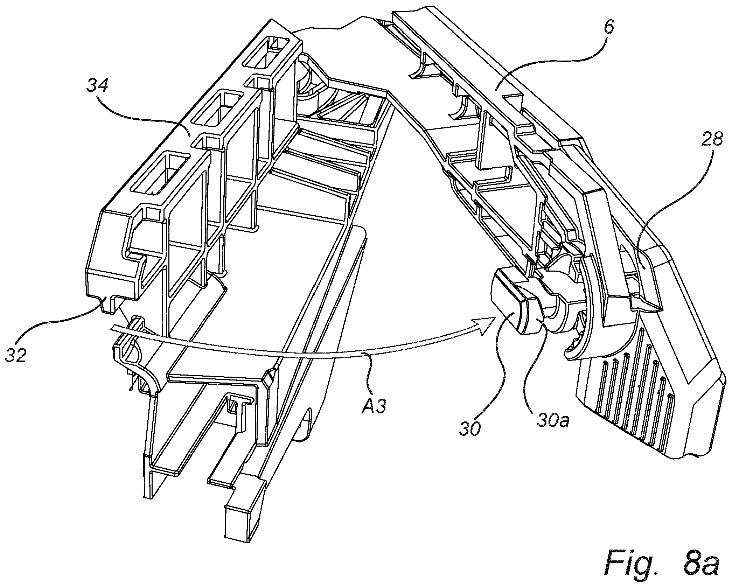

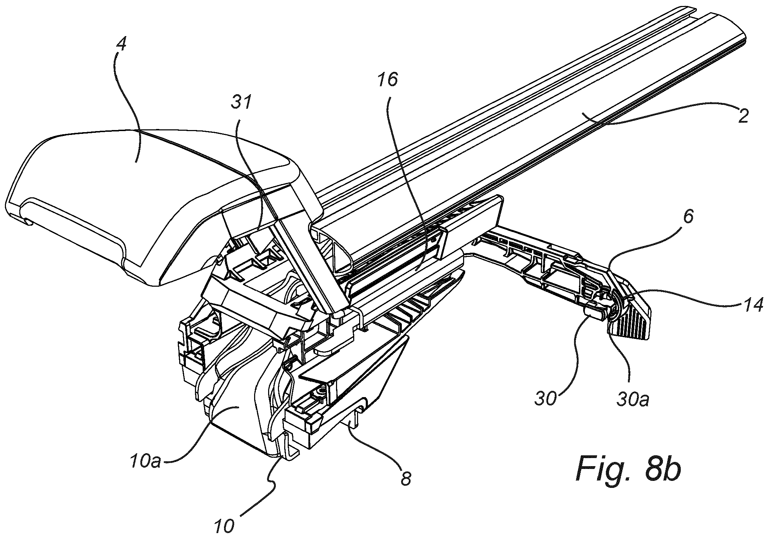

Fig. 8A-B shows the attachment lever 6 when it has disengaged from the side wall 34. As indicated by the arrow A3, the attachment lever 6 is operable in a plane coinciding with the longitudinal extension of the support foot 1. The attachment lever 6 is operable and movable when the locking means 14 is in an unlocked state and when the stopping protrusion 18 of the cap 4 is not arranged within the slit 28. The locking means 14 may, e.g., be adapted to be brought between the unlocked state and the locked state only when the attachment lever 6 is in a closed position. A closed position of the attachment lever 6 would in such a case entail that the lever 6 and the locking means 14 is in contact with the support foot 1. The attachment 6 lever may, when brought to said closed position, be brought to a latched state in which it is latched to the support foot 1. When the attachment lever 6 is latched to the support foot 1, the locking means 15 is adapted to be brought into the locked state, thereby locking the lever 6 to the support foot 1. The attachment 6 lever may, when latched to the support foot 1, snap-lock to the foot 1 such that a sound signaling that the lever 6 is latched is emitted.

By operating the attachment lever 6, the first and the second clamping portions 8, 10 of the clamping mechanism is also operated. By operating the first and the second clamping portions 8,10, the support foot 1 may be attached to a roof rail of a vehicle.

The person skilled in the art realizes that the present inventive concept by no means is limited to the embodiments described above. The features of the described embodiments may be combined in different ways, and many modifications and variations are possible within the scope of the appended claims. In the claims, any reference signs placed between parentheses shall not be construed as limiting the claim. The word "comprising" does not exclude the presence of other elements or steps than those listed in the claim. The word "a" or "an" preceding an element does not exclude the presence of a plurality of such elements.

## Claims

1. A support foot (1) for a luggage carrier for a vehicle, said support foot (1) comprising:
a first clamping portion (8) and a second clamping portion (10), wherein at least one of said first (8) and second (10) clamping portions is movable;
a clamping mechanism comprising an attachment lever (6), said attachment lever (6) is arranged to operate in a first plane between a closed and an open position, and thereby also moving said at least one movable clamping portion (8, 10);
a locking means (14) comprising a locked state and an unlocked state,
**characterized in that:**
said locking means (14) is adapted to receive a key; and
wherein the support foot (1) further comprises a cap (4) comprising a latched state and an unlatched state, wherein said cap (4) is adapted to cover said locking means (14) and at least partially cover said attachment lever (6) when said cap (4) is in said latched state and wherein said cap (4) is adapted to pivot in a second plane when said cap (4) is in said unlatched state; and
wherein said cap (4) is in said latched state when said locking means (14) is in said locked state, and wherein said cap (4) is in said unlatched state when said locking means (14) is in said unlocked state.

2. The support foot (1) according to claim 1, wherein said cap (4) further comprises a stopping protrusion (18), wherein said attachment lever (6) further comprises a slit (28), and wherein said stopping protrusion (18) is slideably arranged within said slit (28).

3. The support foot (1) according to claim 2, wherein said stopping protrusion (18) further comprises a radial cut-out (29) adapted to abut on a radial surface (30) of said locking means (14) when said locking means (14) is in said locked state.

4. The support foot (1) according to any preceding claim, wherein said locking means (14) comprises a rotational axis (RA), and wherein said locking means (14) is arranged to rotate around said rotational axis (RA) between said locked state and said unlocked state.

5. The support foot (1) according to claim 4, wherein said locking means (14) is further arranged to move along said rotational axis (RA) between said locked state and said unlocked state.

6. The support foot (1) according to claim 4 or 5, wherein said locking means (14) further comprises a first stopping surface (20), wherein said first stopping surface (20) is adapted to abut on and stop said stopping protrusion (18) of said cap (4) when said locking means (14) is in said locked state such that said cap (4) is in said latched state.

7. The support foot (1) according to claim 6, wherein said locking means (14) further comprises a second stopping surface (22), wherein said second stopping surface (22) is adapted to abut on and stop said stopping protrusion (18) of said cap (4) when said locking means (14) is in said unlocked state such that said cap (4) is in said unlatched state.

8. The support foot (1) according to claim 6, wherein said cap (4) comprises an abutment surface (31) adapted to abut on an outer peripheral surface (32) of said locking means (14) when said locking means (14) is in said unlocked state.

9. The support foot (1) according to any preceding claim, wherein said attachment lever (6) further comprises a cylindrical hollow portion (26), and wherein said locking means (14) is adapted to be arranged within said cylindrical hollow portion (26).

10. The support foot (1) according to claim 9 and claim 2, wherein said cylindrical hollow portion (26) is intersecting said slit (28).

11. The support foot (1) according to claim 9 or 10, wherein said cylindrical hollow portion (26) comprises at least one cirumferential track portion (26a, 26b) arranged along an inner circumference of said cylindrical hollow portion (26), and wherein said locking means (14) comprises at least one sliding surface (15, 17) adapted to abut on said at least one circumferential track portion (26a, 26b) such that said locking means (14) is adapted to slide along said at least one circumferential track portion (26a, 26b) when said locking means (14) is rotated.

12. The support foot (1) according to claim 11, wherein said at least one circumferential track portion (26a, 26b) is spirally arranged along a periphery of said cylindrical hollow portion (26) such that said locking means (14) is adapted to move along said rotational axis when said locking means (14) is rotated.

13. The support foot (1) according to claim 11 or 12, wherein said locking means (14) comprises a first (15) and a second (17) sliding surface, wherein said cylindrical hollow portion (26) comprises a first (26a) and a second (26b) cirumferential track portion, and wherein said first sliding surface (15) is adapted to abut on said first circumferential track portion (26a) and said second sliding surface (17) is adapted to abut on said second circumferential track portion (26a).

14. A method for covering a locking means (14) and at least partially cover an attachment lever (6) of a support foot (1) according to claim 1, comprising:
providing said support foot (1), wherein said locking means (14) is in said unlocked state and said cap (4) is in said unlatched state;
operating said attachment lever (6) in said first plane from an open position to a closed position;
moving said cap (4) from a first unlatched position to a second unlatched position;
bringing said locking means (14) from said unlocked state to said locked state, thereby also bringing said cap (4) from said unlatched state to said latched state; and
moving said cap (4) from a first latched position to a second latched position, thereby covering said locking means (14) and at least partially cover said attachment lever (6).

15. A load bar (2) for a vehicle roof comprising at least one support foot (1) according to any one of claims 1-13.

## Patentansprüche

1. Stützfuß (1) für einen Fahrzeuggepäckträger, wobei der Stützfuß (1) Folgendes umfasst:
einen ersten Einspannabschnitt (8) und einen zweiten Einspannabschnitt (10), wobei der erste (8) und/oder der zweite (10) Einspannabschnitt beweglich ist;
einen Einspannmechanismus, umfassend einen Befestigungshebel (6), wobei der Befestigungshebel (6) dazu angeordnet ist, in einer ersten Ebene zwischen einer geschlossenen und einer geöffneten Stellung zu wirken und dadurch außerdem den mindestens einen beweglichen Einspannabschnitt (8, 10) zu bewegen;
eine Verriegelungseinrichtung (14), umfassend einen Verriegelungszustand und einen Entriegelungszustand,
**dadurch gekennzeichnet, dass**:
die Verriegelungseinrichtung (14) dazu eingerichtet ist, einen Schlüssel aufzunehmen; und
wobei der Stützfuß (1) ferner eine Kappe (4) umfasst, die einen eingerasteten Zustand und einen nicht eingerasteten Zustand umfasst, wobei die Kappe (4) dazu eingerichtet ist, die Verriegelungseinrichtung (14) abzudecken und den Befestigungshebel (6) zumindest teilweise abzudecken, wenn sich die Kappe (4) im eingerasteten Zustand befindet, und wobei die Kappe (4) dazu eingerichtet ist, sich in eine zweite Ebene zu verschwenken, wenn sich die Kappe (4) im nicht eingerasteten Zustand befindet; und
wobei sich die Kappe (4) im eingerasteten Zustand befindet, wenn sich die Verriegelungseinrichtung (14) im Verriegelungszustand befindet und wobei sich die Kappe (4) im nicht eingerasteten Zustand befindet, wenn sich die Verriegelungseinrichtung (14) im Entriegelungszustand befindet.

2. Stützfuß (1) nach Anspruch 1, wobei die Kappe (4) ferner einen Stoppervorsprung (18) umfasst, wobei der Befestigungshebel (6) ferner einen Schlitz (28) umfasst und wobei der Stoppervorsprung (18) verschiebbar innerhalb des Schlitzes (28) angeordnet ist.

3. Stützfuß (1) nach Anspruch 2, wobei der Stoppervorsprung (18) ferner einen radialen Ausschnitt (29) umfasst, der dazu eingerichtet ist, an einer radialen Fläche (30) der Verriegelungseinrichtung (14) anzuschlagen, wenn sich die Verriegelungseinrichtung (14) im Verriegelungszustand befindet.

4. Stützfuß (1) nach einem der vorstehenden Ansprüche, wobei die Verriegelungseinrichtung (14) eine Drehachse (RA) umfasst und wobei die Verriegelungseinrichtung (14) dazu angeordnet ist, sich zwischen dem Verriegelungszustand und dem Entriegelungszustand um die Drehachse (RA) zu drehen.

5. Stützfuß (1) nach Anspruch 4, wobei die Verriegelungseinrichtung (14) ferner dazu angeordnet ist, sich zwischen dem Verriegelungszustand und dem Entriegelungszustand entlang der Drehachse (RA) zu bewegen.

6. Stützfuß (1) nach Anspruch 4 oder 5, wobei die Verriegelungseinrichtung (14) ferner eine erste Stopperfläche (20) umfasst, wobei die erste Stopperfläche (20) dazu eingerichtet ist, am Stoppervorsprung (18) der Kappe (4) anzuschlagen und diesen zu stoppen, wenn sich die Verriegelungseinrichtung (14) im Verriegelungszustand befindet, sodass sich die Kappe (4) im eingerasteten Zustand befindet.

7. Stützfuß (1) nach Anspruch 6, wobei die Verriegelungseinrichtung (14) ferner eine zweite Stopperfläche (22) umfasst, wobei die zweite Stopperfläche (22) dazu eingerichtet ist, am Stoppervorsprung (18) der Kappe (4) anzuschlagen und diesen zu stoppen, wenn sich die Verriegelungseinrichtung (14) im Entriegelungszustand befindet, sodass sich die Kappe (4) im nicht eingerasteten Zustand befindet.

8. Stützfuß (1) nach Anspruch 6, wobei die Kappe (4) eine Anschlagfläche (31) umfasst, die dazu eingerichtet ist, an einer Außenumfangsfläche (32) der Verriegelungseinrichtung (14) anzuschlagen, wenn sich die Verriegelungseinrichtung (14) im Entriegelungszustand befindet.

9. Stützfuß (1) nach einem der vorstehenden Ansprüche, wobei der Befestigungshebel (6) ferner einen zylindrischen Hohlraum (26) umfasst und wobei die Verriegelungseinrichtung (14) dazu eingerichtet ist, innerhalb des zylindrischen Hohlraums (26) angeordnet zu sein.

10. Stützfuß (1) nach Anspruch 9 und Anspruch 2, wobei der zylindrische Hohlraum (26) den Schlitz (28) kreuzt.

11. Stützfuß (1) nach Anspruch 9 oder 10, wobei der zylindrische Hohlraum (26) mindestens einen umlaufenden Schienenabschnitt (26a, 26b) umfasst, der entlang eines Innenumfangs des zylindrischen Hohlraums (26) angeordnet ist, und wobei die Verriegelungseinrichtung (14) mindestens eine Schiebefläche (15, 17) umfasst, die dazu eingerichtet ist, an dem mindestens einen umlaufenden Schienenabschnitt (26a, 26b) anzuschlagen, sodass die Verriegelungseinrichtung (14) dazu eingerichtet ist, sich entlang des mindestens einen umlaufenden Schienenabschnitts (26a, 26b) zu verschieben, wenn die Verriegelungseinrichtung (14) gedreht wird.

12. Stützfuß (1) nach Anspruch 11, wobei der mindestens eine umlaufende Schienenabschnitt (26a, 26b) entlang des Umfangs des zylindrischen Hohlraums (26) spiralförmig angeordnet ist, sodass die Verriegelungseinrichtung (14) dazu eingerichtet ist, sich entlang der Drehachse zu bewegen, wenn die Verriegelungseinrichtung (14) gedreht wird.

13. Stützfuß (1) nach Anspruch 11 oder 12, wobei die Verriegelungseinrichtung (14) eine erste (15) und eine zweite (17) Schiebefläche umfasst, wobei der zylindrische Hohlraum (26) einen ersten (26a) und einen zweiten (26b) umlaufenden Schienenabschnitt umfasst und wobei die erste Schiebefläche (15) dazu eingerichtet ist, am ersten umlaufenden Schienenabschnitt (26a) anzuschlagen, und die zweite Schiebefläche (17) dazu eingerichtet ist, am zweiten umlaufenden Schienenabschnitt (26a) anzuschlagen.

14. Verfahren zum Abdecken einer Verriegelungseinrichtung (14) und um einen Befestigungshebel (6) eines Stützfußes (1) nach Anspruch 1 zumindest teilweise abzudecken, Folgendes umfassend:
Vorsehen des Stützfußes (1), wobei sich die Verriegelungseinrichtung (14) im Entriegelungszustand befindet und sich die Kappe (4) im nicht eingerasteten Zustand befindet;
Betätigen des Befestigungshebels (6) in die erste Ebene von einer geöffneten Stellung in eine geschlossene Stellung;
Bewegen der Kappe (4) von einer ersten nicht eingerasteten Stellung in eine zweite nicht eingerastete Stellung;
Bringen der Verriegelungseinrichtung (14) vom Entriegelungszustand in den Verriegelungszustand, wodurch außerdem die Kappe (4) vom nicht eingerasteten Zustand in den eingerasteten Zustand gebracht wird; und
Bewegen der Kappe (4) von einer ersten eingerasteten Stellung in eine zweite eingerastete Stellung, wodurch die Verriegelungseinrichtung (14) abgedeckt wird und der Befestigungshebel (6) zumindest teilweise abgedeckt wird.

15. Lastenträger (2) für ein Fahrzeugdach, umfassend mindestens einen Stützfuß (1) nach einem der Ansprüche 1-13.

## Revendications

1. Pied de support (1) pour un porte-bagages pour véhicule, ledit pied de support (1) comprenant :
une première partie de serrage (8) et une seconde partie de serrage (10),
dans lequel au moins l'une desdites première (8) et seconde (10) parties de serrage est mobile ;
un mécanisme de serrage comprenant un levier de fixation (6), ledit levier de fixation (6) étant conçu pour fonctionner dans un premier plan entre une position fermée et une position ouverte, et déplaçant ainsi également ladite au moins une partie de serrage mobile (8, 10) ;
un moyen de verrouillage (14) comprenant un état verrouillé et un état déverrouillé,
**caractérisé en ce que** :
ledit moyen de verrouillage (14) est adapté pour recevoir une clé ; et
dans lequel le pied de support (1) comprend en outre un capuchon (4) comprenant un état enclenché et un état non enclenché, dans lequel ledit capuchon (4) est adapté pour recouvrir ledit moyen de verrouillage (14) et au moins partiellement ledit levier de fixation (6) lorsque ledit capuchon (4) est dans ledit état enclenché et dans lequel ledit capuchon (4) est adapté pour pivoter dans un second plan lorsque ledit capuchon (4) est dans ledit état non enclenché ; et
dans lequel ledit capuchon (4) est dans ledit état enclenché lorsque ledit moyen de verrouillage (14) est dans ledit état verrouillé, et dans lequel ledit capuchon (4) est dans ledit état non enclenché lorsque ledit moyen de verrouillage (14) est dans ledit état déverrouillé.

2. Pied de support (1) selon la revendication 1, dans lequel ledit capuchon (4) comprend en outre une protubérance d'arrêt (18), dans lequel ledit levier de fixation (6) comprend en outre une fente (28), et dans lequel ladite protubérance d'arrêt (18) est disposée de manière coulissante à l'intérieur de ladite fente (28).

3. Pied de support (1) selon la revendication 2, dans lequel ladite protubérance d'arrêt (18) comprend en outre une découpe radiale (29) adaptée pour venir en butée sur une surface radiale (30) dudit moyen de verrouillage (14) lorsque ledit moyen de verrouillage (14) est dans ledit état verrouillé.

4. Pied de support (1) selon l'une quelconque des revendications précédentes, dans lequel ledit moyen de verrouillage (14) comprend un axe de rotation (RA), et dans lequel ledit moyen de verrouillage (14) est conçu pour tourner autour dudit axe de rotation (RA) entre ledit état verrouillé et ledit état déverrouillé.

5. Pied de support (1) selon la revendication 4, dans lequel ledit moyen de verrouillage (14) est en outre conçu pour se déplacer le long dudit axe de rotation (RA) entre ledit état verrouillé et ledit état déverrouillé.

6. Pied de support (1) selon la revendication 4 ou 5, dans lequel ledit moyen de verrouillage (14) comprend en outre une première surface d'arrêt (20), dans lequel ladite première surface d'arrêt (20) est adaptée pour venir en butée sur et arrêter ladite protubérance d'arrêt (18) dudit capuchon (4) lorsque ledit moyen de verrouillage (14) est dans ledit état verrouillé de sorte que ledit capuchon (4) est dans ledit état enclenché.

7. Pied de support (1) selon la revendication 6, dans lequel ledit moyen de verrouillage (14) comprend en outre une seconde surface d'arrêt (22), dans lequel ladite seconde surface d'arrêt (22) est adaptée pour venir en butée sur et arrêter ladite protubérance d'arrêt (18) dudit capuchon (4) lorsque ledit moyen de verrouillage (14) est dans ledit état déverrouillé de sorte que ledit capuchon (4) est dans ledit état non enclenché.

8. Pied de support (1) selon la revendication 6, dans lequel ledit capuchon (4) comprend une surface de butée (31) adaptée pour venir en butée sur une surface périphérique extérieure (32) dudit moyen de verrouillage (14) lorsque ledit moyen de verrouillage (14) est dans ledit état déverrouillé.

9. Pied de support (1) selon l'une quelconque des revendications précédentes, dans lequel ledit levier de fixation (6) comprend en outre une partie creuse cylindrique (26), et dans lequel ledit moyen de verrouillage (14) est adapté pour être disposé dans ladite partie creuse cylindrique (26).

10. Pied de support (1) selon la revendication 9 et la revendication 2, dans lequel ladite partie creuse cylindrique (26) coupe ladite fente (28).

11. Pied de support (1) selon la revendication 9 ou 10, dans lequel ladite partie creuse cylindrique (26) comprend au moins une partie de piste circonférentielle (26a, 26b) disposée le long d'une circonférence intérieure de ladite partie creuse cylindrique (26), et dans lequel ledit moyen de verrouillage (14) comprend au moins une surface de glissement (15, 17) adaptée pour venir en butée sur ladite au moins une partie de piste circonférentielle (26a, 26b) de sorte que ledit moyen de verrouillage (14) est adapté pour glisser le long de ladite au moins une partie de piste circonférentielle (26a, 26b) lorsque ledit moyen de verrouillage (14) est mis en rotation.

12. Pied de support (1) selon la revendication 11, dans lequel ladite au moins une partie de piste circonférentielle (26a, 26b) est disposée en spirale le long d'une périphérie de ladite partie creuse cylindrique (26) de sorte que ledit moyen de verrouillage (14) est adapté pour se déplacer le long dudit axe de rotation lorsque ledit moyen de verrouillage (14) est mis en rotation.

13. Pied de support (1) selon la revendication 11 ou 12, dans lequel ledit moyen de verrouillage (14) comprend une première (15) et une seconde (17) surface de glissement, dans lequel ladite partie creuse cylindrique (26) comprend une première (26a) et une seconde (26b) partie de piste circonférentielle, et dans lequel ladite première surface de glissement (15) est adaptée pour venir en butée sur ladite première partie de piste circonférentielle (26a) et ladite seconde surface de glissement (17) est adaptée pour venir en butée sur ladite seconde partie de piste circonférentielle (26a).

14. Procédé de recouvrement d'un moyen de verrouillage (14) et de recouvrement au moins partiel d'un levier de fixation (6) d'un pied de support (1) selon la revendication 1, comprenant :
la fourniture dudit pied de support (1), dans lequel ledit moyen de verrouillage (14) est dans l'état déverrouillé et ledit capuchon (4) est dans l'état non enclenché ;
l'actionnement dudit levier de fixation (6) dans ledit premier plan, d'une position ouverte à une position fermée ;
le déplacement dudit capuchon (4) d'une première position non enclenchée à une seconde position non enclenchée ;
le passage dudit moyen de verrouillage (14) de l'état déverrouillé à l'état verrouillé, faisant ainsi passer ledit capuchon (4) de l'état non enclenché à l'état enclenché ; et
le déplacement dudit capuchon (4) d'une première position enclenchée à une seconde position enclenchée, recouvrant ainsi ledit moyen de verrouillage (14) et au moins partiellement ledit levier de fixation (6).

15. Barre de chargement (2) pour le toit d'un véhicule comprenant au moins un pied de support (1) selon l'une quelconque des revendications 1 à 13.
